# EUROPEAN PATENT APPLICATION

(11) **EP 4 685 540 A1**
(43) Date of publication of application: **28.01.2026**
(21) Application number: 24425037.9
(22) Date of filing: 24.07.2024
(51) Int. Cl.: G02B 7/183, G02B 7/185, G02B 7/198, B25J 17/02

(54) **DEVICE FOR THE RELATIVE POSITIONING OF A FIRST AND A SECOND STRUCTURE IN SPACE**

(71) Applicant: Dal Ben S.p.A., 30029 San Stino di Livenza (ME) (IT)
(72) Inventor: Dal Ben, Gabriele Maria, 30029 SAN STINO DI LIVENZA (VE) (IT)
(74) Representative: Studio Torta S.p.A.

(57) **Abstract**

Device for the relative positioning of a first (3) and a second structure (4) in space comprising a first, a second and a third linear actuation assembly (6; 7; 8) having respective parallel axes (A1; A2; A3) and each comprising a first part (10, 14) configured to be rigidly constrained to the first structure (3), a movable member (25) movable along the respective axis (A1; A2; A3) with respect to the first part (10, 14), a second part (33; 41; 64) configured to be rigidly constrained to the second structure (4) and a ball joint (34) interposed between the movable member (25) and the second part (33; 41; 64); the joints (34) are constrained to the respective movable members (25) with zero, one and two degrees of freedom of translation, respectively.

## Description

### TECHNICAL SECTOR

The present invention relates to a device for the relative positioning of a first and a second structure in space.

The present invention finds a preferred, though not exclusive, application in the precision positioning of modular mirror elements for telescopes, which will be referred to below by way of non-limiting example.

### PRIOR ART

The telescopes for astronomical observatories are frequently provided with large mirrors consisting of a plurality of adjacent modules. An example of this type of mirror is the mirrors for Cherenkov telescopes used in gamma-ray astronomy.

In the aforesaid type of composite mirrors, the problem arises of positioning the individual modules with high precision so as to ensure the accuracy of the overall geometry of the mirror and, consequently, optimal optical performance of the mirror itself.

Furthermore, in the aforesaid applications a need arises to periodically adjust the position of the modules.

Similar needs arise in other technical fields, where it is necessary to perform, and adjust over time, the relative positioning of two structures in space, e.g., a fixed support structure and a movable structure whose position is to be controlled with respect to the support structure.

### DISCLOSURE OF THE INVENTION

The aim of the present invention is therefore to make a device for the relative positioning of a first and a second structure in space, which allows a high positioning precision and the possibility of performing a periodic, or possibly even continuous, adjustment of the position of one structure with respect to the other.

The aforesaid aim is achieved by a positioning device according to claim 1.

### BRIEF DESCRIPTION OF THE DRAWINGS

Further features and advantages of the present invention will become apparent from the detailed description that follows, provided by way of non-limiting example and with reference to the accompanying drawings, wherein:
figure 1 is a perspective view of an astronomical telescope employing a plurality of positioning assemblies made according to the present invention;
figure 2 is a perspective view of a positioning device according to the invention;
figure 3 is a plan view of the positioning device of figure 2;
figure 4 is an elevation view of the positioning device of figure 2;
figure 5 is a section according to the line V-V of figure 4;
figure 6 is a section along the line VI-VI of figure 3;
figure 7 illustrates a first detail of figure 5 on an enlarged scale;
figure 8 illustrates a second detail of figure 5 on an enlarged scale;
figure 9 is a partial section along the line IX-IX of figure 3;
figure 10 illustrates a detail of figure 9 on an enlarged scale;
figures 11 and 12 are perspective, partial and partial-sectional views along the lines XI-XI and XII-XII of figure 6.

### DESCRIPTION OF EMBODIMENTS

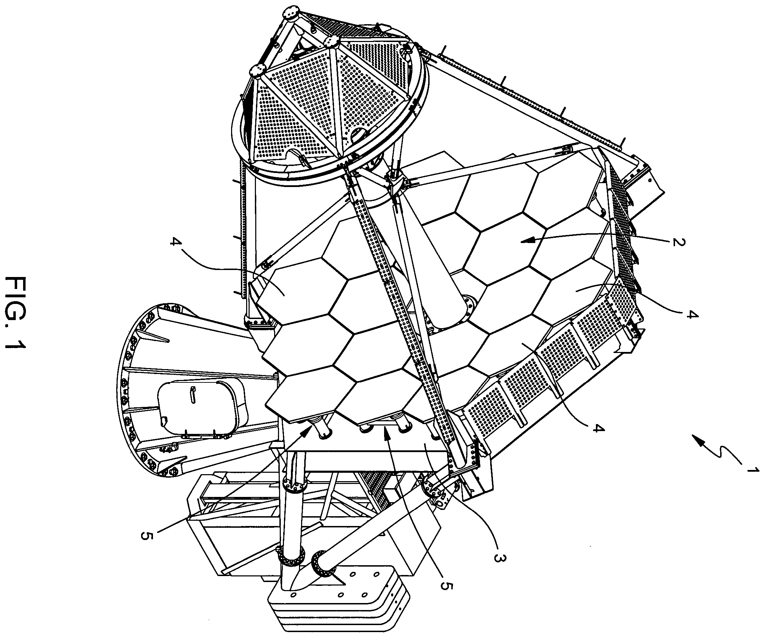

With reference to figure 1, an astronomical telescope is indicated as a whole with 1 comprising, for what is of interest herein, a primary mirror 2 constrained to a slab support structure 3 and formed by a plurality of hexagonal modules 4 arranged in adjacent positions to each other.

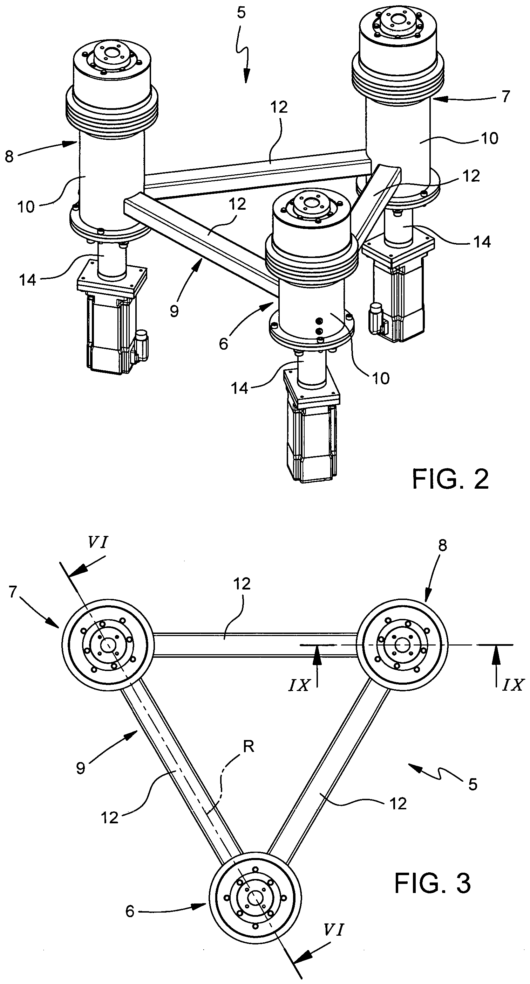

Each of the modules 4 is constrained to the support structure 3 by a respective positioning device 5 (hereinafter referred to as "device 5" for the sake of brevity) made according to the present invention and illustrated in figures 2 and following.

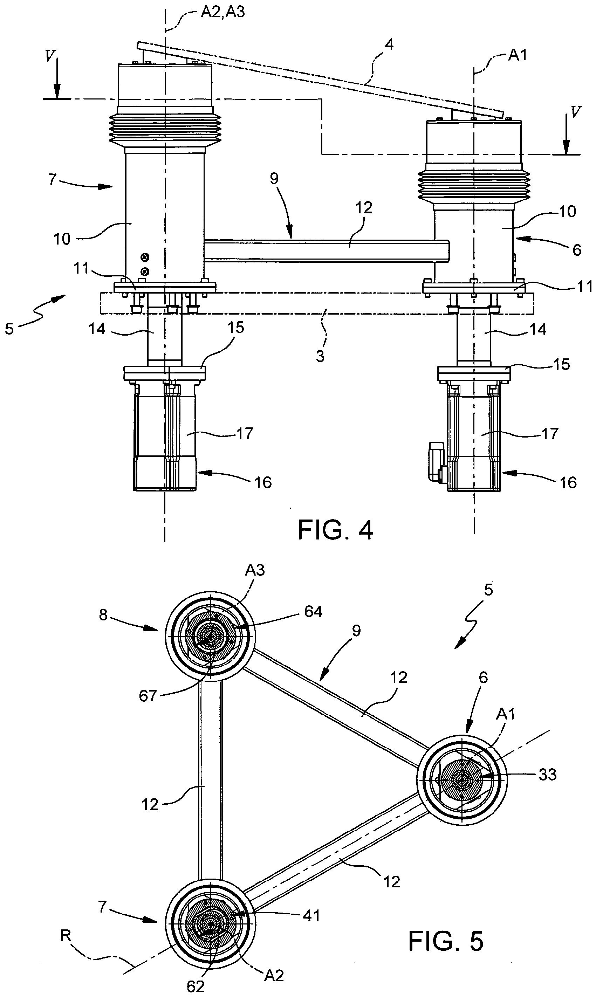

With reference to figures 2 to 6, the device 5 comprises three actuation assemblies 6, 7, 8 having respective axes A1, A2, A3 perpendicular to the support structure 3, whose traces in a plane perpendicular thereto constitute the vertices of a triangle, preferably equilateral (figures 3 and 5).

The device 5 further comprises a fixed frame 9, comprising three cylindrical rods 10 of axes A1, A2, A3 fixed to the support structure 3 by means of respective end flanges 11, and three bars 12 arranged in an equilateral triangle and rigidly joining the rods 10 to each other two by two.

Respective tubular sleeves 14, having a smaller diameter than the flanges, extend from the flanges 11 in a direction axially opposite the respective rods 10. The sleeves 14 carry respective flanges 15 at the free ends thereof.

The rods 10 and the sleeves 14 define, overall, a fixed part of the respective actuation assembly 6, 7 or 8.

In the following, only the actuation assembly 6 is described in detail for the sake of brevity; what is stated for the actuation assembly 6 also applies to the actuation assemblies 7, 8, unless otherwise indicated.

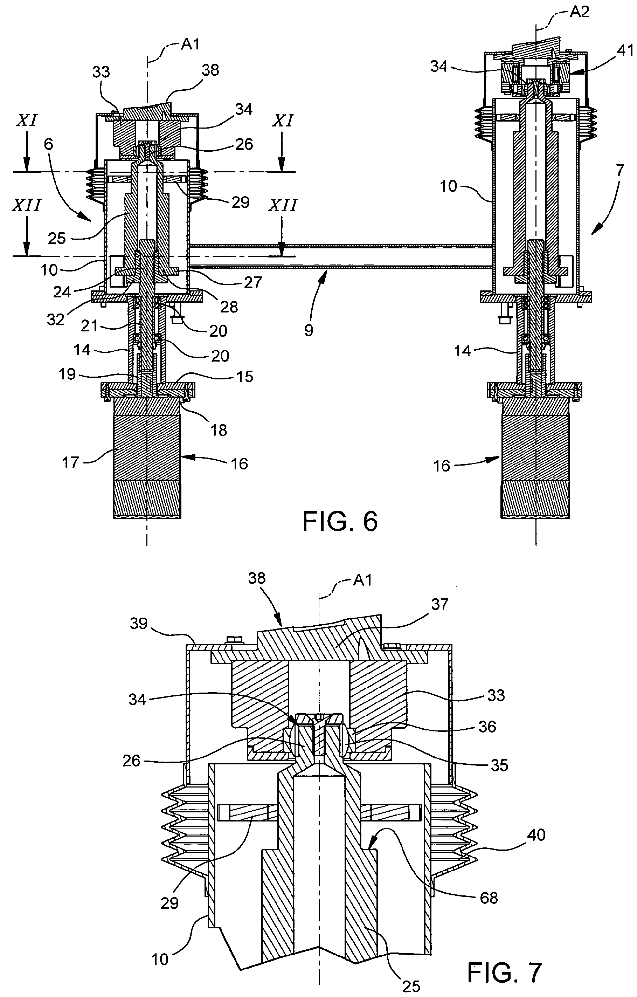

The actuation assembly 6 comprises an electric motor 16 of axis A1, having a casing 17 provided with an end flange 18 fixed to the respective flange 15 of the frame (figures 4 and 6).

The electric motor 16 has a tubular output shaft 19 of axis A1, extending inside the respective sleeve 14 and connected in a rotationally integral and axially free manner with a first end of a drive shaft 21, also of axis A1, the drive shaft 21 is supported in an angularly free manner inside the sleeve 14 itself by means of a pair of bearings 20. The drive shaft 21 has a second screw end 24 extending inside the respective rod 10.

Inside the rod 10, coaxially thereto, a tubular stem 25 is mounted in an axially movable and angularly fixed manner, ending with a closed upper end 26 and having an annular flange 27 outside a lower end 28 thereof.

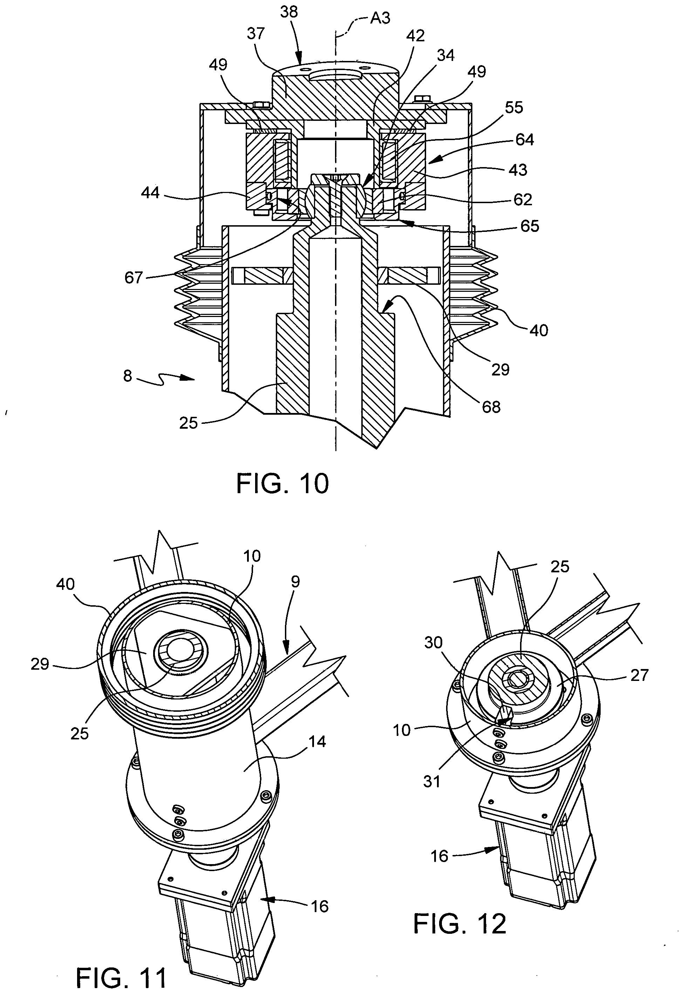

In particular, the stem 25 is guided by a radial support 29 (figures 7 and 11) fixed inside the rod 10 near an upper end thereof and is rotationally locked in the rod 10 by a prismatic coupling between an insert 30 fixed inside the rod 10 and a radial groove 31 of the flange 27 (figures 6 and 12) .

The actuation assembly 6 further comprises a nut 32 integrally carried by the stem 25. The nut 32 is preferably housed in the lower end 28 of the stem 25 and is in mesh with the second screw end 24 of the drive shaft 21, such that driving the electric motor 16 in either direction of rotation produces a corresponding axial translation of the stem 25 along the axis A1 in a corresponding direction.

The actuation assembly 6 further comprises a head 33 of substantially cylindrical, hollow shape connected to the upper end 26 of the stem 25 by means of a ball joint 34. In particular, the ball joint 34 comprises an inner spherical head 35 rigidly fixed to the upper end 26 of the stem 25 and an outer ring 36 rigidly fixed inside the head 33, viz., without any degree of translational freedom, and having an inner spherical surface cooperating with the spherical head 35 in a rotationally free manner.

A flange 37 defining a support plane 38 for the module 4 and constituting the end member of the actuation assembly 6 is fixed to an upper end of the head 33.

The connection between the stem 25 and the head 33 is protected by a substantially inverted cup-shaped cover 39 fixed to the flange 35 and configured so as to enclose the head 35, and by a bellows 40 surrounding the upper end of the rod 10 and fixed at the ends to the cover 37 and to the rod 10, respectively. Thereby, the inside of the rod 10 and the ball joint 34 are prevented from being exposed to external agents.

As mentioned above, the actuation assemblies 7, 8 are essentially the same as the actuation assembly 6, except as noted below. The components of the actuation assemblies 7, 8 which are the same as the already-described components of the actuation assembly 6 are indicated with the same reference number.

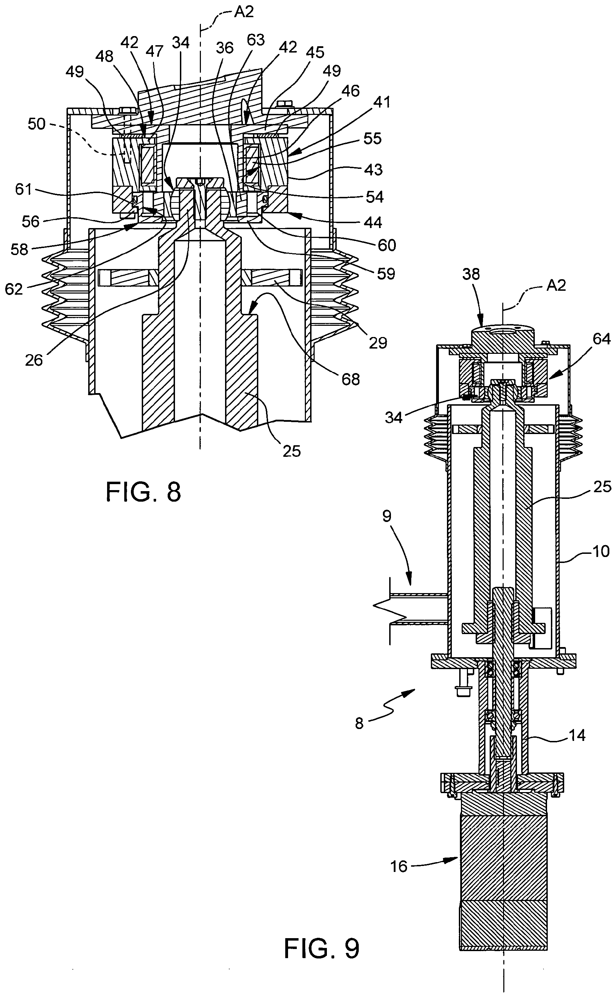

The actuation assembly 7 (figures 6 and 8) has a greater axial extension than the actuation assembly 6 and comprises a head 41 connected to the respective ball joint 34 so as to allow the latter a degree of freedom of translation in the direction of the straight line R joining the centres of the ball joints 34 of the actuation assembly 6 and the actuation assembly 7.

For this purpose, the head 41 (fig. 8) is made in three parts: an upper element 42, an intermediate element 43 and a lower element 44 coaxial to each other.

The upper element 42 comprises an annular upper flange 45, to which the flange 37 of the actuation assembly 7 is fixed, and a lower tubular portion 46 extending axially downwards from an inner edge of the flange 45.

The intermediate element 43 has a hollow cylinder shape externally coaxial to the tubular portion 46 of the upper element 42, and is provided with an inner flange 47 delimited at the top by an upper surface 48 of the intermediate element 43 facing the flange 45 of the upper element 42.

A plurality of permanent magnets 49, preferably replaced by magnetic plates angularly equally-spaced to each other, is arranged between the flange 45 and the upper surface 48 of the intermediate element 43.

The upper element 42 and the intermediate element 43 are rigidly fixed to each other by a plurality of axial screws 50 interspersed with permanent magnets 49.

The intermediate element 43 delimits with the tubular portion 46 of the upper element 42 an annular cavity 54 in which an electromagnet 55 is housed. The electromagnet 55 is configured to generate, when energised, a magnetic flux antagonistic to that generated by the permanent magnets 49, as will be further described below.

The lower element 44 of the head 41 is substantially shaped like an annular frame and has an inner lower edge 56 facing and axially spaced with respect to a lower surface of the intermediate element 43.

The head 41 lastly comprises a support 58 housed inside the lower element 44 and substantially shaped like a tray, having a flat lower annular wall 59 axially facing the electromagnet 55 and the tubular portion 46 of the intermediate element 43 and a side wall 60 provided with an outer flange 61 axially locked between the lower inner edge 56 of the lower element 44 and the intermediate element 43.

The side wall 60 delimits an oblong seat 62, elongated in the direction of the straight line R, joining the centres of the ball joint 34 of the actuation assembly 6 and the ball joint 41 of the actuation assembly 7.

The ball joint 41 has the outer ring 36 housed inside a guide ring 63, which in turn is housed in the seat 62 of the support 58 with freedom of movement along the straight line R but without clearance in the direction transverse to the straight line R and in the axial direction. In particular, the guide ring 63 is guided axially by a head surface of the tubular portion 46 of the intermediate element 43 and by the lower wall 59 of the support 58, and is guided transversely by flat, parallel and opposite sections of the side wall 60 of the support 58 (fig. 5).

At least the upper and intermediate elements 42, 43 of the head 41, the support 58 and the guide ring 62 are made of a ferromagnetic material so as to create a magnetic flux whose flux lines close therethrough.

The actuation assembly 8 (fig. 9 and 10) is the same as the actuation assembly 7 described above; the only difference is that the actuation assembly 8 comprises a head 64 connected to the respective ball joint 34 with two degrees of freedom of translation along a plane parallel to the plane joining the centres of the three ball joints 34.

For this purpose, the head 64, otherwise identical to the head 41 of the actuation assembly 7, comprises a support 65 whose side wall 66, instead of defining an oblong seat in one direction, defines a circular seat 67 (figures 5 and 10) housing the guide ring 63 of the ball joint 34 with radial clearance.

Lastly, it is noted that the actuation assemblies 6, 7 and 8 have different axial lengths and the respective end flanges 37 define respective support surfaces 38 for the module 4 which are coplanar to each other, and inclined with respect to the axes A1, A2, A3 so as to define a preset lying plane for the module itself in a limit-switch position of the actuation assemblies 6, 7, 8.

Such a limit-switch position is defined by the axial contact between respective annular stops 68 of the stems 25 of the actuation assemblies 6, 7, 8 (fig. 7, 8 and 10) and the respective radial supports 29.

Lastly, the device 5 is provided with an electronic control system, not illustrated, connected to the electric motors 16 and electromagnets 55. The control system is configured to control the motors 16 to vary the layout of the module 4, and is configured so as to energise the electromagnets 55 whenever it powers the electric motors 16.

The drive of the electric motors 16 is performed starting from a zero or "homing" position corresponding to the limit-switch position of the actuation assemblies 6, 7, 8 described above and detectable by the control system as a result of the increase in current absorbed by the electric motors 16 when the stems 25 stop.

The operation of the device 5, already partly clear from the above, is as follows.

In the absence of electric drive of the motors 16 and the electromagnets 55 of the actuation assemblies 7 and 8, the joints 34 are locked in the respective heads 41, 64 as a result of the magnetic field generated by the permanent magnets 49. In this condition, since none of the ball joints 34 has any degree of freedom of translation, the device 5 is locked and rigidly connects the module 4 to the support structure 3.

To vary the position of the module 4 with respect to the support structure, the control device drives the electric motors 16 of the actuation assemblies 6, 7 and 8 to axially move the stems 25 and, consequently, the centres of the ball joints 34 to a new desired position. As mentioned above, when the electric motors 16 are energised, the electromagnets 55 of the actuation assemblies 7, 8 are energised, which neutralise the magnetic field produced by the permanent magnets 49, thus releasing the ball joints 34 of the actuation assemblies 7, 8 with respect to the respective heads 41, 64.

Thanks to the rotational and translational degrees of freedom at the respective constraints, the module 4 can be roto-translated in space with respect to the support structure 3 to assume the desired layout. If the stroke of at least one of the actuation assemblies 7, 8 is different from the stroke of the actuation assembly 6, and therefore there is no simple rigid translation in the direction parallel to axes A1, A2 and A3, at least one of the ball joints 34 can translate with respect to the respective head 41, 64 according to the degree(s) of freedom permitted by their constraints.

It is finally clear that modifications and variations can be made to the device 5 without thereby departing from the scope of protection defined by the claims.

For example, the actuation assemblies 6, 7, 8 and the relative heads 33, 41, 64 can be made differently. Furthermore, the device of the invention can be used for applications other than astronomy and, in general, can be used for the relative positioning of any first and second structure.

## Claims

1. Device for the relative positioning of a first (3) and a second structure (4) in space, the device comprising a first, a second and a third linear actuation assembly (6; 7; 8) having respective axes (A1; A2; A3) and each comprising a first part (10, 14) configured to be rigidly constrained to the first structure (3), a movable member (25) movable along the respective axis (A1; A2; A3) with respect to the first part (10, 14), a second part (33; 41; 64) configured to be rigidly constrained to the second structure (4) and a ball joint (34) interposed between the movable member (25) and the second part (33; 41; 64), the axes (A1; A2; A3) of the three actuation assemblies (6; 7; 8) being parallel to each other, wherein the joint (34) of the first actuation assembly (6) is constrained to the respective movable member (25) and to the respective second part (33) without degrees of freedom of translation, the joint (34) of the second actuation assembly (7) is constrained to one of the respective movable member (25) and the respective second part (41) with a degree of freedom of translation in a direction parallel to the joining R of respective centres of the joints (34) of the first and the second actuation assembly (6; 7), and the joint (34) of the third actuation assembly (8) is constrained to one of the respective movable member (25) and the respective second part (64) with two degrees of freedom of translation in a plane containing the centres of the joints of the first, second and third actuation assemblies (6, 7; 8).

2. Device according to claim 1, wherein at least one of the second and the third actuation assembly (7; 8) comprises a locking device (49, 55) for selectively locking the second part (33; 64) with respect to the movable member (25) once a predetermined position has been reached, eliminating the degree(s) of freedom of translation of the respective constraint.

3. Device according to claim 2, wherein the locking device (49, 55) comprises at least one electromagnet (55).

4. Device according to claim 3, wherein the locking device (49, 55) comprises at least one permanent magnet (49).

5. Device according to claim 4, wherein the locking device (49, 55) is configured to lock the second part (33; 64) with respect to the movable member (25) as a result of the at least one permanent magnet (49) when the electromagnet (55) is not energised, the electromagnet (55) being configured to generate a magnetic field antagonistic to that of the at least one permanent magnet (49) and release the second part (33; 64) with respect to the movable member (25) when the electromagnet (55) is energised.

6. Device according to any one of the preceding claims, wherein the first parts (10, 14) of the actuation assemblies (6; 7; 8) are rigidly connected to each other by a plurality of connecting elements (12) forming with said first parts a frame (9) configured to be rigidly fixed to the first structure (3).

7. Device according to one of claims 2 to 6, wherein the first parts of the actuation assemblies (6; 7; 8) comprise respective tubular elements (10).

8. Device according to claim 7, wherein the connecting elements comprise bars (12) rigidly connecting said tubular elements (10) to each other.

9. Device according to one of the preceding claims, wherein each actuation assembly (6; 7; 8) comprises an electric motor (16) carried by the first part (10, 14) and a screw-nut system (24, 32) interposed between the electric motor (16) and the respective movable member (25), the screw-nut system (24, 32) comprising a screw (24) rotationally coupled to an output member (19) of the electric motor (16) and a nut (32) rigidly connected to the movable member (25).

10. Device according to one of claims 7 to 9, wherein the movable member comprises a stem (25) axially guided and rotationally fixed in the respective tubular element (10).

11. Device according to claim 10, wherein, in each actuation assembly (6; 7; 8), the ball joint (34) comprises a spherical head (35) fixed to an end (26) of the stem (25) and an outer ring (36), and the second part is constituted by an end head (33; 41; 64) housing the ball joint (34).

12. Device according to claim 11, wherein the end head (41; 64) of the second and the third actuation assembly (7; 8) comprises a seat (62; 67) housing the ball joint (34) with clearance in the direction of the respective degree of freedom.

13. Positioning system comprising a first support structure (3), a second movable structure (4) and at least one device (5) according to any one of the preceding claims interposed between the first and the second structure (3, 4) to vary the position of the second structure (4) with respect to the first structure (3).

14. Positioning system according to claim 13, wherein the second structure is a support slab, and the second structure is an optical unit for astronomy.

15. System according to claim 14, wherein the optical unit is a mirror or a module of a mirror (4).
